# EUROPEAN PATENT APPLICATION

(11) **EP 3 235 738 A1**
(43) Date of publication of application: **25.10.2017**
(21) Application number: 15870277.9
(22) Date of filing: 15.12.2015
(51) Int. Cl.: B65B 1/14, B65B 1/08, B65B 57/10, B65B 37/12, B65B 37/04

(54) **CASSETTE FOR DRUG PACKAGING**

(30) Priority: 15.12.2014 KR 20140180760
(71) Applicant: Cretem Co., Ltd., Anyang-si, Gyeonggi-do 14057 (KR)
(72) Inventor: KIM, Hoyeon, Anyang-si Gyeonggi-do 14062 (KR)
(74) Representative: Grünecker Patent- und Rechtsanwälte PartG mbB
(86) International application number: PCT/KR2015/013716
(87) International publication number: WO 2016/099110

(57) **Abstract**

Disclosed is a drug packaging cassette including: a storage unit configured to store a plurality of units of a drug; a drive unit rotating the storage unit and moving the storage unit up and down so that at least one unit of the units of a drug is discharged out of the storage unit; a supply unit supplying the unit of a drug discharged out of the storage unit to a drug packaging member; and an adjustment unit controlling the number of the units of a drug supplied through the supply unit. With this structure, it is possible to improve drug supply efficiency, thereby contributing to mass packaging of drugs.

## Description

### Technical Field

The present invention relates to a cassette for drug packaging and, more particularly, to a cassette for drug packaging, the cassette having a compact size and ensuring high supply efficiency for various drugs.

### Background Art

Drug packaging cassettes that automatically dispense a plurality of units of a drug (the units hereinafter meaning tablets, capsules, pills, lozenges, and any other discrete forms of a drug that can be individually handled, and the units of a drug hereinafter being referred to as simply drug units) as prescribed for a variety of illnesses and package the drug units in single doses have recently become widely available. Such a drug packaging cassette functions as a storage tank for storing a plurality of units of a drug and discharges the drug unit by unit. The drug packaging cassettes are aligned on a plurality of shelves in a drug packaging apparatus and discharge an appropriate number of units of a drug in accordance with an operator's instructions. The drug discharged out of the drug packaging cassette is supplied to a drug packaging member through a hopper, and then discharged outside the drug packaging apparatus.

Drug packaging cassettes typically separate and package a plurality of units of a drug using a rotary drum. In the case of drum-type cassette, the shape of a drum needs to vary in accordance with the shape of each unit of a drug. If not, drug supply errors in which drug units are not separated from each other occur, or a drug separation speed is excessively low.

To solve the problems of the drum-type cassette, used is a vibration-type cassette in which a storage tank storing a plurality of units of a drug is vibrated so that drug units are separated from each other, raised, and supplied to drug packaging members. However, this vibration-type cassette also has a problem that vibration force exerting on each drug unit varies depending on the shape of the drug unit. Therefore, some drug units are not supplied or a drug supply efficiency is deteriorated depending on the shape of each drug unit. In addition, in the case of the vibration-type cassette, since a drug packaging apparatus employing the vibration-type cassette is large and heavy, it is uncomfortable to package drugs with this type of cassette.

### Disclosure

### Technical Problem

Accordingly, the present invention has been made in view of the problems described above, and an object of the present invention is to provide a drug packaging cassette having a compact size but responding to various drugs and enabling mass packaging.

### Technical Solution

In order to accomplish the object of the invention, according to one aspect, there is provided a drug packaging cassette including: a storage unit configured to store a plurality of drug units; a drive unit rotating the storage unit and moving the storage unit up and down such that at least one drug unit of the drug units is discharged out of the storage unit; a supply unit supplying the drug unit discharged out of the storage unit to a drug packaging member; and an adjustment unit controlling the number of drug units supplied through the supply unit.

According to the aspect, the storage unit may include: a storage body storing the drug units; and a support body supporting the drug units placed thereon, installed in the storage body, configured to be moved by the drive unit, and having a support surface that supports the drug units placed thereon and slopes down from a rotation center to an outer circumferential edge thereof.

According to the aspect, the drive unit may include: a link mechanism moving the support body up and down to a position where the storage unit communicates with the supply unit; and a rotation mechanism rotating the support body.

According to the aspect, the link mechanism may include a driving force source generating vertical driving force, a first link connected to the driving force source, and a second link connected to the first link and the storage unit, and the rotation mechanism includes a rotary motor installed between the second link and the storage unit

According to the aspect, the drive unit may include a position sensor detecting a position of the support body in a vertical direction.

According to the aspect, the supply unit may include: a supply portion having a pipe shape with an inlet connected to the storage unit and an outlet disposed near the drug packaging member, the supply portion providing a supply path along which the drug units are supplied; a support portion elastically supporting the supply portion; a vibration portion vibrating the supply portion; and a detection portion detecting the drug unit passing through the support body.

According to the aspect, the support portion may include a spring hinge elastically supporting the inlet of the supply portion such that the support body slopes down, in a drug supply direction, from the inlet to the outlet.

According to the aspect, the vibration portion may include a vibrator installed on the supply unit.

According to the aspect, the detection portion may include at least one inlet sensor installed in the inlet to detect the drug unit introduced into the supply portion through the inlet, at least one discharge sensor installed in the outlet to detect the drug unit discharged out of the outlet of the supply portion, and at least one middle sensor installed between the inlet sensor and the discharge sensor to detect the drug unit passing through the supply portion, wherein the cassette may further include a shutter installed at the outlet of the supply portion and operated in accordance with detection information detected by any one of the inlet sensor, the discharge sensor, and the middle sensor.

According to the aspect, the adjustment unit may include: an adjustment pipe communicating with the supply unit and guiding the drug unit; a first branch pipe branching off from the adjustment pipe and guiding the drug unit to the drug packaging member; a second branch pipe branching off from the adjustment pipe and guiding the drug unit such that the drug unit is recovered; a counting sensor detecting the number of drug units passing through the adjustment pipe; and a guide wing rotatably installed in the adjustment pipe and selectively guiding the drug units to the first branch pipe or the second branch pipe in accordance with the number of the drug units, detected by the counting sensor.

### Advantageous Effects

According to the present invention having the structure described above, first, the drug units can be separated from each other and discharged outside by rotating the storage unit and moving the storage unit up and down. Accordingly, the cassette for drug packaging can be used for supply of various drugs.

Second, since the drug units are supplied by centrifugal force, a drug supply time is reduced and thus drug supply efficiency is increased.

Third, since the drug supply efficiency is increased, mass packaging of drugs becomes possible.

Fourth, since drug supply errors can be detected, the drug supply can be cancelled and the drug units discharged by the cassette can be recovered. Therefore, drug supply accuracy can be improved.

### Description of Drawings

FIG. 1 is a perspective view schematically illustrating a drug packaging cassette according to the embodiment of the present invention;
FIG. 2 is a perspective view schematically showing a main portion of the drug packaging cassette shown in FIG. 1;
FIG. 3 is a cross-sectional view schematically illustrating a drive unit shown in FIG. 2;
FIG. 4 is a diagram illustrating operation of the drive unit of FIG. 3;
FIG. 5 is a plan view schematically illustrating the drug packaging cassette of FIG. 2;
FIG. 6 is a perspective view schematically illustrating a supply unit of FIG. 2;
FIG. 7 is a cross-sectional view taken along a line VII-VII of FIG. 5;
FIG. 8 is a cross-sectional view taken along a line VIII-VIII of FIG. 5; and
FIG. 9 is a cross-sectional view schematically illustrating operation of a guide wing of FIG. 8.

### Best Mode

### Mode for Invention

Hereinafter, a preferred embodiment of the invention will be described with reference to the accompanying drawings.

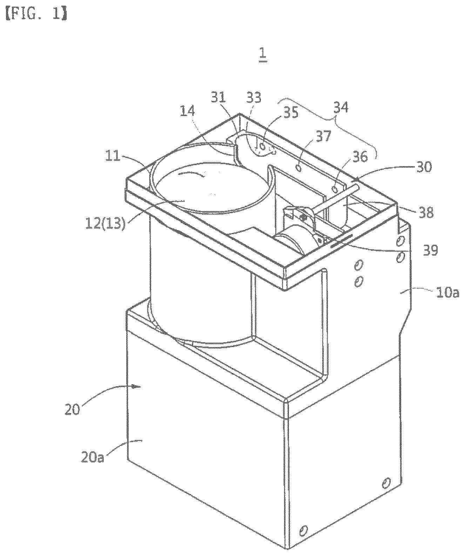

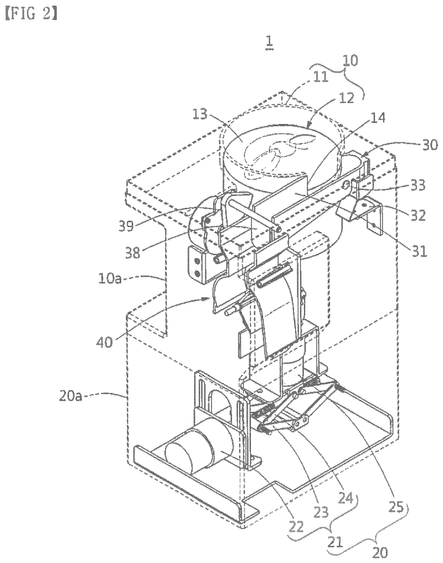

As illustrated in FIGS. 1 and 2, according to the preferred embodiment of the invention, a drug packaging cassette 1 includes a storage unit 10, a drive unit 20, a supply unit 30, and an adjustment unit 40.

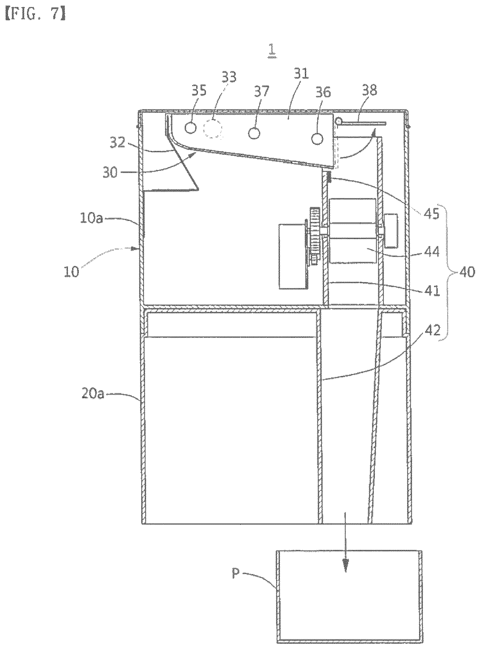

For reference, the drug packaging cassette 1 disclosed in the invention preferably is preferably used in places such as large pharmacies or senior care centers in which a large number of prescriptions are generated and drugs are packaged with drug packaging members P (see FIG. 7) in accordance with the prescriptions. However, the application of the present invention is not limited thereto.

The storage unit 10 stores a large number of units of a drug M (hereinafter, "the units of a drug" will be simply referred to as "drug units") to be packaged with a drug packaging member P. The storage unit 10 includes a storage body 11 and a support body 12. The storage body 11 and the support body 12 are installed in a storage cassette 10a.

The storage body 11 has a storage space in which a plurality of drug units M is stored. Although not illustrated in detail in the drawings, the storage body 11 preferably has a cylinder shape. That is, the storage body 11 may have a rectangular parallelepiped shape having a storage space having a circular cross section so that movement of the drug units M may not be interfered with by the inner surface of the storage space when the drug units are supplied to the drug packaging member.

The support body 12 is installed in the storage body 11 and supports the plurality of drug units M placed thereon. The support body 12 is rotated and moved up and down by the drive unit 20 described below. The support body 12 has a cone shape such that the support body 12 has a support surface 13 slopping down from a rotation center to an outer circumferential edge thereof. That is, the support body 12 has the support surface 13 that is inclined, and a plurality of drug units M is placed on the support surface 13.

As illustrated in FIG. 2, the support body 12 has a cone shape having a size corresponding to that of the cylinder-shaped storage body 11. Thus the support body 12 is rotated and moved up and down while being in contact with the inner surface of the storage body 11 at the periphery thereof. A lower end of the storage body 11 is open so that the support body 12 can be connected to the drive unit 20 described below, and an upper end of the storage body 11 is closed by a cover C.

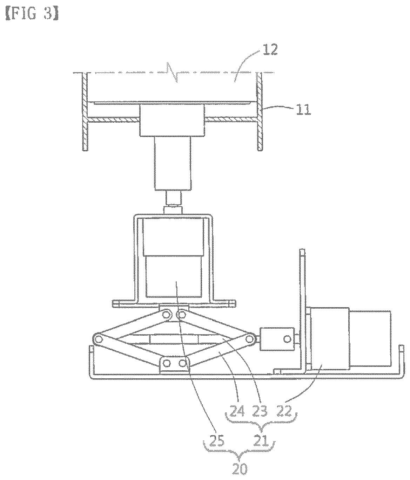

The drive unit 20 rotates the storage unit 10 and moves the storage unit 10 up and down. As illustrated in FIG. 2, the drive unit 20 rotates the storage unit 10 and moves the storage unit 10 up and down. As illustrated in FIGS. 3 and 3, the drive unit 20 includes a link mechanism 21 and a rotation mechanism 25. As illustrated in FIG. 1, the link mechanism 21 and the rotation mechanism 25 are installed in a drive cassette 20a and attached to a lower end of the storage cassette 10a.

The link mechanism 21 moves up or down the support body 12 to a position at which the storage unit 10 communicates with the supply unit 30. The link mechanism 21 includes a driving force source 22, a first link 23, and a second link 24, thereby moving the storage unit 10 up and down. The driving force source 22 includes a motor generating vertical driving force. The first link 23 is linked to the driving force source 22. The second link 24 is linked to the first link 23 and connected to the support body 12 of the storage unit 10, thereby transferring the vertical driving force generated by the driving force source 22 to the storage unit 10.

The rotation mechanism 25 rotates the support body 12 of the storage unit 10. For example, the rotation mechanism 25 includes a rotary motor installed between the second link 24 and the support body 12 of the storage unit 10. With this structure, the rotation mechanism 25 can transfer rotary force to the storage unit 10 while being moved up and down by the second link 24.

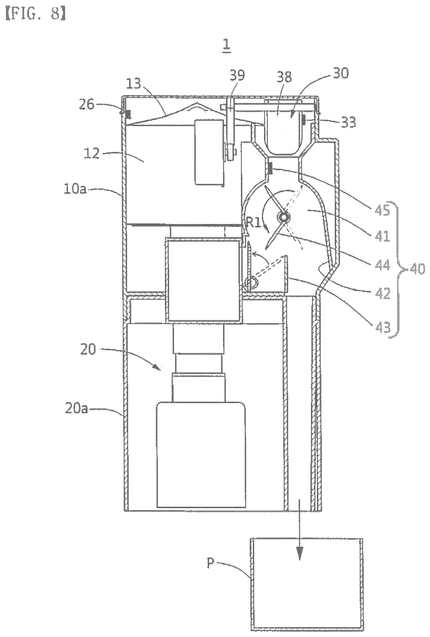

For reference, the drive unit 20 includes a position sensor 26 (see FIG. 8) detecting a position of the support body 12 in a vertical direction.

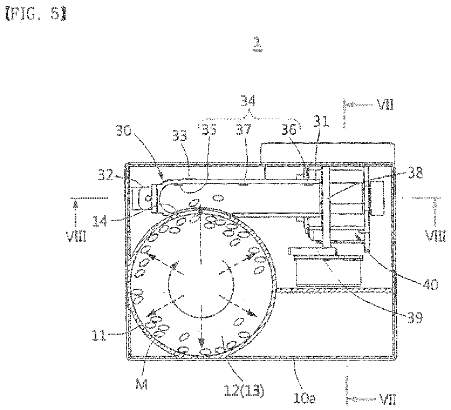

The supply unit 30 supplies the drug units M discharged out of the storage unit 10 to an external path. As illustrated in FIGS. 5 to 7, the supply unit 30 includes a supply portion 31, a support portion 32, a vibration portion 33, and a detection portion 34.

The supply portion 31 has a pipe shape extending such that an inlet of the supply portion 31 is connected to the storage unit 10 and an outlet thereof is disposed near the drug packaging member P, thereby providing a supply path for the drug units M. As shown in FIG. 5, the inlet of the supply portion 31 communicates a supply hole 14 that is a through hole formed in the wall of a storage tank 11 of the storage unit 10.

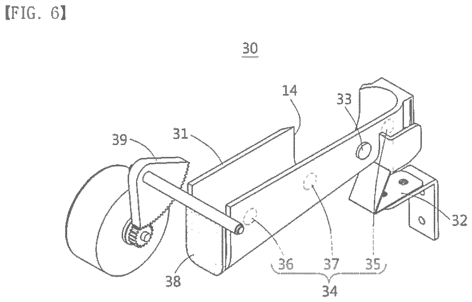

As illustrated in FIG. 6, the supply portion 31 has a U-shaped cross section. The supply portion 31 is not limited to a linear pipe shape. Alternatively, the shape of the supply portion 31 may vary depending on the positions and sizes of the storage unit 10 and the drug packaging member P. For example, the supply portion may have a curved shape or an L shape that can change a direction in which the drug units M are supplied.

The support portion 32 elastically supports the supply portion. As illustrated in FIG. 5, the support portion 32 includes a spring hinge that elastically supports the inlet of the supply portion such that the supply portion 31 slopes down from the inlet to the outlet. Due to the support portion 32 including the spring hinge, even though a heavy drug M is supplied to the inlet of the supply portion 31, the inlet of the supply portion 31 can be elastically supported.

The vibration portion 33 vibrates the supply portion 31. The vibration portion 33 includes a vibrator that is installed at one side of the supply portion 31 and generates vibration. The vibration portion 33 transfers the vibration generated by the vibrator to the supply portion 31. The vibration portion 33 guides the drug units M such that the drug units M are not jammed but smoothly move toward the outlet from the inlet.

Both of the vibration portion 33 and the support portion 32 may installed near the inlet of the supply portion 31. Thus, the spring hinge of the support portion 32 elastically supports the inlet of the supply portion 31. Due to the vibration generated and transferred by the vibration portion 33, deformation of the supply portion 31 increases from the inlet to the outlet thereof.

In addition, as described above, the support portion 32 supports the supply portion 31 such that the supply portion 31 slopes down in the drug supply direction, from the inlet to the outlet. Therefore, although the drug units M introduced into the supply portion 31 through the inlet are jumbled and jammed, the drug units M are separated from each other while moving toward the outlet due to the vibration whose magnitude increases from the inlet to the outlet of the supply portion. Thus, the drug units are sequentially conveyed one unit after another. Therefore, it is possible to discharge the drug units aligned in a line.

In this case, an inclination angle of the supply portion 31 may be within a range of from 3 to 10°. When the inclination angle exceeds 10°, the drug units can move toward the outlet of the supply portion without vibration. Conversely, when the inclination angle is less than 3°, the drug units are not likely to move toward the outlet of the supply portion even with vibration, or the drug units are not likely to be aligned in a line while moving toward the outlet of the supply portion.

The detection portion 34 detects the drug unit M passing through the supply portion 31. The detection portion 34 includes at least one inlet sensor 35, at least one discharge sensor 36, and at least one middle sensor 37. The inlet sensor 35 is installed in the inlet of the supply unit 30 to detect the drug unit M passing the inlet. The discharged sensor 36 is installed in the outlet of the supply unit 30 to detect the drug unit M passing the outlet. The he middle sensor 37 is installed between the inlet sensor 35 and the discharge sensor 36 to detect the drug unit M passing through the supply unit 30.

In the present embodiment, the inlet sensor 35, the discharge sensor 36, and the middle sensor 37 are all single sensors, respectively, but the present invention is not limited thereto. Each of the inlet sensor 35, the discharge sensor 36, and the middle sensor 37 may consist of a pair of sensors arranged to face each other or consist of a plurality of sensors arranged in a circumferential direction. Each of the inlet sensor 35, the discharge sensor 36, and the middle sensor 37 may include an optical sensor that detects absence and presence of a drug unit M by emitting a light ray.

In addition, a shutter 38 that is occasionally operated is installed in the outlet of the supply portion 31. The shutter 38 that normally closes the outlet of the supply portion 31 opens the outlet of the supply portion 31 when a drug discharge signal is transferred thereto, thereby allowing the drug units M in the outlet of the supply portion 31 to be discharged to the adjustment unit 40. After the drug units are completely discharged, the shutter closes the outlet of the supply portion 31.

In addition, the shutter also may be operated in accordance with detection information detected by at least any one of the inlet sensor 35, the discharge sensor 36, and the middle sensor 37. In this case, the shutter 38 closes the outlet of the supply unit 30 to suspend the supply of the drug units M when drug supply errors are detected by any one of the inlet sensor 35, the discharge sensor 36, and the middle sensor 37. In this case, the shutter 38 is independently driven by a shutter driver 39.

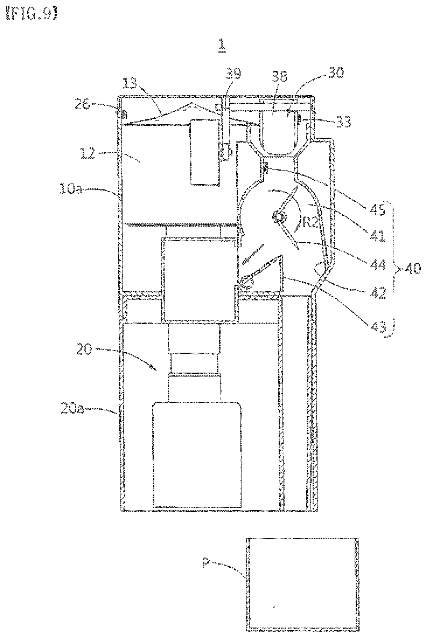

The adjustment unit 40 adjusts the number of drug units M supplied through the supply unit 30. As shown in FIGS. 8 and 9, the adjustment unit 40 includes an adjustment pipe 41, a first branch pipe 42, a second branch pipe 43, a guide wing 44, and a counting sensor 45.

The adjustment pipe 41 communicates with the supply unit 30 and guides the drug units M. The first branch pipe 42 branches off from the adjustment pipe 41 and guides the drug units M to the drug packaging member P. The second branch pipe 43 branches off from the adjustment pipe 41 and guides the drug units M such that the drug units M are recovered. Although the second branch pipe 43 is not illustrated in detail in the drawings, the second branch pipe 43 guides the drug units M to a recovery tank (not shown) or to the storage unit 10.

The guide wing 44 is rotatably installed in the adjustment pipe 41, thereby guiding the drug units M to the first branch pipe 42 or the second branch pipe 43. That is, the guide wing 44 is rotated in the adjustment pipe 41 to control a drug supply path such that the drug units M are guided to the first branch pipe 42 or the second branch pipe 43.

The counting sensor 45 is installed in the adjustment pipe 41, and detects the number of drug units M passing through the adjustment pipe 41. As illustrated in FIGS. 8 and 9, the guide wing 44 is rotated in a first direction R1 or a second direction R2 in accordance with the number of drug units M detected by the counting sensor 45, thereby guiding the drug units M to the drug packaging member P or causing the drug units M to be recovered.

Next, the drug packaging operation of the drug packaging cassette 1 having the structure described above will be described with reference to FIGS. 2 to 9.

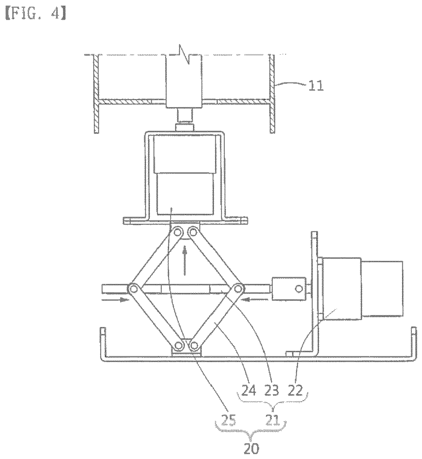

As illustrated in FIGS. 2 to 4, since the storage unit 10 can be rotated by the rotation mechanism 25 of the drive unit 20 as well as be moved up and down by the link mechanism 21 of the drive unit 20, the drug units M supported on the support body 12 are separated from each other and discharged to the supply unit 30 by centrifugal force as shown in FIG. 5. Specifically, as illustrated in FIGS. 3 and 4, when the first link 23 is operated by the driving force generated by the driving force source 22 of the link mechanism 21, the second line 24 moves the support body 12 connected thereto up and down, and the rotation mechanism 25 rotates the support body 12. Consequently, the drug units M move toward the outer circumferential edge of the support body 12 due to the centrifugal force and the inclination of the inclined support surface 13, and then enter into the supply unit 30 through the supply hole 14.

As illustrated in FIGS. 6 and 7, the drug units M introduced into the supply unit 30 are conveyed along the supply portion 31 of the supply unit 30 by means of vibration generated by the vibration portion 33 and are then introduced into the adjustment unit 40. At this point, when the shutter 38 installed in the outlet of the supply unit 30 is opened, the drug units M are discharged to the adjustment unit 40 through the supply unit 30. Meanwhile, drug supply errors are detected by any one of the inlet sensor 35, the discharge sensor 36, and the middle sensor 37 installed in the supply unit 30, the outlet of the supply unit 30 is closed by the shutter 38, so that the supply of the drug units M is stopped.

As shown in FIG. 8, the drug units M discharged out of the adjustment unit 40 are supplied to the drug packaging member P through the first branch pipe 42 of the adjustment pipe 41 when the guide wing 44 is rotated in the first direction R1. On the other hand, as shown in FIG. 9, when the number of drug units M detected by the counting sensor 45 installed in the adjustment unit 40 is excessively large, the guide wing 44 is rotated in the second direction R2, and thus the drug units M are guided through the second branch pipe 43 and recovered.

In addition, the storage unit 10 may include a drug detection sensor detecting a drug unit remaining on the support surface 13 of the support body 12. When the inlet sensor 32 indicates that no drug unit is introduced into the inlet of the supply portion 31 in a state in which the drug detection sensor indicates that there is a drug unit on the support sensor 13, the rotation mechanism 25 drives a rotary motor to rotate the support body 12 faster. In this case, since the centrifugal force is increased, the drug unit can be easily supplied to the supply portion from the storage unit. When the drug units begin to be supplied to the supply portion, the rotary motor of the rotation mechanism 25 is driven to reduce the rotation speed of the storage portion.

When it is determined that no drug unit remains on the support surface 13 of the support body 12, operation of the drug packaging apparatus may be stopped and a drug replenishment signal will be output to an external device.

On the other hand, when it is necessary to replace the recovery tank for a certain reason, for example, when the recovery tank is full, or when it is necessary to replenish drug units or to perform repair or replacement of the adjustment portion due to malfunctioning of the adjustment portion, a main power supply of the drug packaging apparatus can be switched off. In this case, the driving force source 22 of the link mechanism, the rotary motor of the rotation mechanism 25, and the vibration portion 33 are individually operated to put the drug units on standby to be discharged.

That is, in a state in which the operation of the drug packaging apparatus is stopped, the discharge sensor 36 determines whether there is a drug unit in the outlet of the supply portion 31. When no drug unit is detected in the outlet, the vibration portion 33 is operated to convey the drug unit to the outlet of the supply portion 31.

In addition, in a state in which the operation of the drug packaging apparatus is stopped, the middle sensor 37 determines whether there is a drug unit on a supply path in the supply portion 31. When it is determined that there is no drug unit at a middle portion of the supply portion, the vibration portion 33 is driven such that drug units are supplied to and aligned in a line at the middle portion of the supply portion 31.

In addition, in a state in which the operation of a drug packaging system is stopped, the inlet sensor 32 determines there is a drug unit in the inlet of the supply portion 31. When it is determined that there is no drug unit in the inlet of the supply portion, the driving force source 22 of the link mechanism and the rotary motor of the rotation mechanism 25 are driven such that drug units are introduced into the supply portion 31 from the storage unit 10.

As described above, when a main power supply of the drug packaging apparatus is switched off, the driving force source 22 of the link mechanism, the rotary motor of the rotation mechanism 25, and the vibration portion 33 are individually and independently driven such that the drug units are transferred to a position where the drug units are ready to be supplied to the drug packaging member. Therefore, a drug packaging time is shortened when the operation of the drug packaging apparatus is resumed.

In addition, it is possible to control the rotation speed of the storage portion of the drug packaging apparatus. That is, when the drug units are not easily discharged out of the storage unit, the rotation speed of the support body is increased. Conversely, when the drug units are smoothly discharged, the rotation speed of the support body is maintained. In this way, drug units can be smoothly and easily discharged out of the storage unit.

Although a preferred embodiment of the present invention has been described for illustrative purposes, those skilled in the art will appreciate that various modifications, additions and substitutions are possible, without departing from the scope and spirit of the invention as disclosed in the accompanying claims.

### Industrial Applicability

The present invention relates to a drug packaging apparatus for use in hospitals, pharmacies, households, senior care centers, etc.

## Claims

1. A cassette for drug packaging, the cassette comprising:
a storage unit configured to store a plurality of drug units;
a drive unit rotating the storage unit and moving the storage unit up and down such that at least one drug unit of the drug units is discharged out of the storage unit;
a supply unit supplying the drug unit discharged out of the storage unit to a drug packaging member; and
an adjustment unit adjusting the number of drug units supplied through the supply unit.

2. The cassette for drug packaging, according to claim 1, wherein the storage unit comprises:
a storage body storing the drug units; and
a support body supporting the drug units placed thereon, installed in the storage body, configured to be moved by the drive unit, and having a support surface that supports the drug units placed thereon and slopes down from a rotation center to an outer circumferential edge thereof.

3. The cassette for drug packaging, according to claim 2, wherein the drive unit comprises:
a link mechanism moving the support body up and down to a position where the storage unit communicates with the supply unit; and
a rotation mechanism rotating the support body.

4. The cassette for drug packaging, according to claim 3, wherein the link mechanism comprises:
a driving force source generating vertical driving force;
a first link connected to the driving force source; and
a second link connected to the first link and the storage unit,
wherein the rotation mechanism comprises a rotary motor installed between the second link and the storage unit

5. The cassette for drug packaging, according to any one of claim 2 to 4, wherein the drive unit comprises a position sensor detecting a position of the support body in a vertical direction.

6. The cassette for drug packaging, according to claim 1, wherein the supply unit comprises:
a supply portion having a pipe shape with an inlet connected to the storage unit and an outlet disposed near the drug packaging member, the supply portion providing a supply path along which the drug units are supplied;
a support portion elastically supporting the supply portion;
a vibration portion vibrating the supply portion; and
a detection portion detecting the drug units passing through the support body.

7. The cassette for drug packaging, according to claim 6, wherein the support portion comprises a spring hinge elastically supporting the inlet of the supply portion such that the support body slopes down, in a drug supply direction, from the inlet to the outlet.

8. The cassette for drug packaging, according to claim 6, wherein the vibration portion comprises a vibrator installed on the supply portion.

9. The cassette for drug packaging, according to claim 6, wherein the detection portion comprises at least one inlet sensor installed in the inlet to detect the drug unit introduced into the supply portion through the inlet, at least one discharge sensor installed in the outlet to detect the drug unit discharged out of the outlet of the supply portion, and at least one middle sensor installed between the inlet sensor and the discharge sensor to detect the drug unit passing through the supply portion,
wherein the cassette further comprises a shutter installed at the outlet of the supply portion and operated in accordance with detection information detected by any one of the inlet sensor, discharge sensor, and middle sensor.

10. The cassette for drug packaging, according to claim 1, wherein the adjustment unit comprises:
an adjustment pipe communicating with the supply unit and guiding the drug unit;
a first branch pipe branching off from the adjustment pipe and guiding the drug unit to the drug packaging member;
a second branch pipe branching off from the adjustment pipe and guiding the drug unit such that the drug unit is recovered;
a counting sensor detecting the number of drug units passing through the adjustment pipe; and
a guide wing rotatably installed in the adjustment pipe and selectively guiding the drug units to the first branch pipe or the second branch pipe in accordance with the number of the drug units, detected by the counting sensor.

11. A cassette for drug packaging, the cassette comprising:
a storage cassette including a storage body having a wall defining a storage space for storing a plurality of drug units, a cover covering an upper end portion of the storage body, and a support body having a periphery surface being in contact with an inside surface of the storage body, defining a lower end of the storage space, and having a convex upper surface;
a drive cassette including a link mechanism moving the support body up and down and a rotation mechanism rotating the support body;
a supply portion extending obliquely downward from a supply hole formed in the wall of the storage body, having an inlet communicating with the supply hole and an outlet that is a freely movable end, and conveying and guiding the drug units;
a shutter opening and closing the outlet of the supply portion;
a spring hinge elastically supporting the inlet of the supply portion such that the inlet of the supply portion is supported by the storage cassette;
a vibration portion vibrating the supply portion; and
an adjustment unit detecting the number of drug units supplied through the supply portion and guiding the drug units to a drug packaging path or a drug recovery path in accordance with the detected number of drug units.

12. The cassette for drug packaging, according to claim 11, wherein the supply portion slopes down from the inlet to the outlet, at an inclination angle of from 3° to 10°.

13. The cassette for drug packaging, according to claim 11, wherein the adjustment unit comprises:
an adjustment pipe communicating with the supply portion and guiding the drug units;
a first branch pipe branching off from the adjustment pipe and communicating with the drug packaging member, thereby guiding the drug units such that the drug units are supplied to the drug packaging member;
a second branch pipe branching off from the adjustment pipe and guiding the drug units such that the drug units are recovered;
a counting sensor detecting the number of drug units passing through the adjustment pipe; and
a guide wing rotatably installed in the adjustment pipe, and selectively guiding the drug units to any one of the first branch pipe and the second branch pipe in accordance with the number of drug units detected by the counting sensor.
